# EUROPEAN PATENT SPECIFICATION

(11) **EP 3 243 706 B1**
(45) Date of publication and mention of the grant of the patent: **11.12.2019**
(21) Application number: 16169150.6
(22) Date of filing: 11.05.2016
(51) Int. Cl.: B60R 21/01, B60R 21/36

(54) **A VEHICLE SAFETY SYSTEM**
FAHRZEUGSICHERHEITSSYSTEM
SYSTÈME DE SÉCURITÉ DE VÉHICULE

(43) Date of publication of application: 15.11.2017
(73) Proprietor: Veoneer Sweden AB, 447 83 Vårgårda (SE)
(72) Inventor: OSTLING, Martin, 507 33 Bramhult (SE); THOMPSON, Greg, Beverley Hills, MI 48025 (US)
(74) Representative: Beattie, Alex Thomas Stewart

(56) References cited:
- EP-A1- 2 671 763
- WO-A1-2010/142380
- WO-A2-2009/090030
- DE-A1-102004 058 176
- DE-A1-102008 032 981
- GB-A- 2 436 692
- US-A1- 2006 052 924

## Description

The present invention relates to a vehicle safety system, and in particular concerns a system and method for controlling the inflation of an air-bag.

It is now well-known to provide inflatable air-bags to protect occupants of a vehicle, as well as pedestrians, cyclists and other people who may be involved in a collision with the vehicle, in the event of a crash or other accident.

One challenge in successful deployment of an air-bag is the correct timing of the initial inflation of the air-bag, and the subsequent venting of gas from the interior of the air-bag to allow the air-bag to deflate in the correct manner as it absorbs energy. Many current systems involve air-bags with vents that are open as soon as the air-bag is inflated. Other systems have one or more vents that are opened a fixed time after inflation is initiated.

GB2436692 discloses a method of operating a restraint system in a vehicle comprises deploying a safety device such as an airbag in response to a pre-crash sensing system prior to collision in a first stage. Subsequently, inflation of the airbag is controlled, preferably via a vent, in a second stage in response to acceleration signals of the vehicle. The inflation may also be controlled in response to; seat position, seatbelt status, or a confidence factor. The collision may be classified by scanning a frontal zone of the vehicle.

It is an object of the present invention to provide an improved system of this type.

Accordingly, one aspect of the present invention provides a vehicle safety system comprising: a pre-crash sensor, to detect a pedestrian with which the vehicle will collide, or is likely to collide, before a collision between the vehicle and the pedestrian takes place; a crash sensor, to detect directly a collision between the vehicle and the pedestrian; a control unit; and an air-bag to protect a pedestrian in the event of a collision, wherein the safety system is adapted: in response to a determination from the pre-crash sensor that a collision is inevitable or likely, but before a determination is made that a crash is occurring, to inflate the air-bag; and in response to a determination from the crash sensor that a collision is occurring, to vent the air-bag after inflation in such a way as to protect a pedestrian who is struck by the vehicle, wherein the venting of the air-bag is initiated a set length of time after the determination from the crash sensor, and wherein the control unit is adapted to calculate the set length of time based upon measured parameters relating to the size of the pedestrian, the relative speed between the vehicle and the pedestrian, and/or the speed of the vehicle, and wherein the calculation of the set time takes into account: an air-bag pressure profile, representing the pressure within the air-bag over time following inflation of the air-bag in the absence of a significant impact or other significant external forces acting on the air-bag; a drop in pressure within the air-bag over time following venting of the air-bag; a desired pressure within the air-bag at the moment of impact between the air-bag and a pedestrian; and an estimated length of time between the determination by the crash sensor and the moment of impact between the air-bag and a pedestrian.

Preferably, the air-bag is provided with two or more different venting modes, allowing venting of gas from the interior of the air-bag at different rates, and the control unit is adapted to select one of the venting modes for the venting step.

Another aspect of the present invention provides a method of controlling an air-bag to protect a pedestrian in the event of a collision, the method comprising the steps of: in response to a determination from a pre-crash sensor that a collision is inevitable or likely, but before a determination is made that a crash is occurring, inflating the air-bag; and in response to a determination from the crash sensor that a collision is occurring, venting the air-bag after inflation in such a way as to protect a pedestrian who is struck by the vehicle, wherein venting of the air-bag is initiated a set length of time after the determination from the crash sensor, further comprising calculating the set length of time based upon measured parameters relating to the size of the pedestrian, the relative speed between the vehicle and the pedestrian, and/or the speed of the vehicle, and wherein the calculation of the set time takes into account: an air-bag pressure profile, representing the pressure within the air-bag over time following inflation of the air-bag in the absence of a significant impact or other significant external forces acting on the air-bag; a drop in pressure within the air-bag over time following venting of the air-bag; a desired pressure within the air-bag at the moment of impact between the air-bag and a; and an estimated length of time between the determination by the crash sensor and the moment of impact between the air-bag and a pedestrian.

In order that the present invention may be more readily understood, embodiments thereof will now be described, with reference to the accompanying drawings, in which:
Figure 1 is a schematic view of a vehicle incorporating a safety system embodying the present invention;
Figure 2 shows a schematic view of an inflation profile for a pedestrian protection air-bag without venting; and
Figure 3 shows inflation profiles for a pedestrian protection air-bag during various crash events.

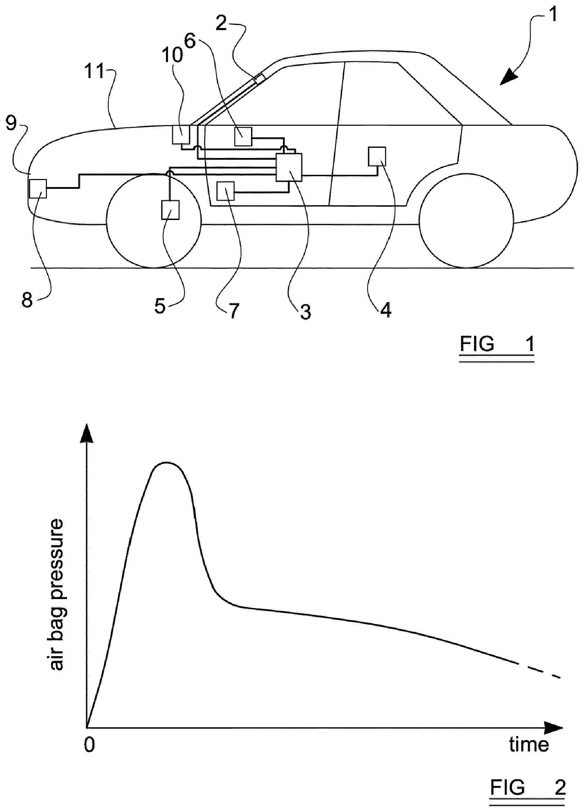

With reference firstly to Figure 1, a schematic picture of a vehicle 1 is shown. The vehicle 1 includes a pre-crash sensor, which is configured to detect an object with which the vehicle may collide, and provide information that may allow calculation of the likely time and relative speed of the collision, before any contact between the vehicle and the object has occurred. In this example the pre-crash sensor takes the form of a stereo camera 2, which is (as is known in the art) mounted near the top of the windscreen, facing in a forward direction.

The skilled reader will appreciate that the pre-crash sensor may take any other suitable form, however, such as a radar or lidar system, or a mono camera. If the pre-crash sensor includes one or more cameras then these may operate at any suitable frequencies, such as optical or infra-red frequencies.

The stereo camera 2 is connected to an ECU 3, which takes the form of a processor, or alternatively two or more processors which are arranged around the vehicle 1.

The ECU 3 may be the main vehicle ECU, or may alternatively be a different ECU such as a camera ECU or restraint ECU. The ECU 3 is configured to receive and interpret signals/data from the stereo camera 2, to identify objects ahead of the vehicle 1 with which the vehicle may collide, and also the distance and relative speed of these objects. In performing these calculations, the ECU 3 may also make use of information from a range of other vehicle systems, including information from a positioning system 4 of the vehicle 1 (such as a GPS system), to determine the velocity and location of the vehicle, information from wheel sensors 5, to determine the speed of the vehicle 1, information from a hand wheel sensor 6, to determine the current and likely future trajectory of the vehicle 1, and one or more pedal sensors 7, to determine the current and likely future acceleration/deceleration of the vehicle.

The use of a pre-crash sensor to identify an object with which the vehicle may collide, and the likely time and relative speed of collision, is known *per se* and will not be discussed at length in this specification.

The vehicle 1 also includes at least one impact sensor, to sense directly an impact between the vehicle 1 and an object. In the example shown the impact sensor takes the form of a piezoelectric sensor 8 which is mounted within the front bumper 9 of the vehicle 1. As is known in the art, the piezoelectric sensor 8 is able to send a signal to the ECU 3 when it experiences forces indicative of an impact with an object such as a pedestrian. Any other suitable impact sensor, such as an accelerometer or a pressure sensor, or indeed any combination of suitable impact sensors, may also be used.

The vehicle 1 further includes a pedestrian protection air-bag 10. When deployed, the pedestrian protection air-bag 10 is inflated and extends to cover all, most or some of the bonnet 11, the windscreen 12 and/or the A-pillars 13 of the vehicle 1. In this example the pedestrian protection air-bag 10 is a relatively large air-bag that covers substantially all of the bonnet, windscreen and A-pillars. Before deployment, the pedestrian protection air-bag 10 is rolled and/or folded into a housing which is preferably positioned near the front edge the bonnet 11. However, the housing may also be positioned near or beneath the rear edge of the bonnet 11, or in any other suitable position.

The pedestrian protection air-bag 10 includes a venting arrangement, which may be selectively opened under the control of the ECU 3. For instance, the venting arrangement may comprise an aperture in the fabric of the air-bag 10, which can be opened by activation of a small pyrotechnic charge which ruptures a pre-formed tear seam. Another example of a suitable ventilation arrangement can be seen in EP2,671,763. Whichever type of ventilation is used, it is preferred that the ventilation arrangement is relatively close to the housing of the air-bag, so that a control signal does not need to be transmitted over a large distance. Also, it is preferred that the or each vent is provided in a location which will not be covered by a pedestrian at any stage of an impact.

If the pedestrian protection air-bag 10 is inflated, and the venting arrangement is not activated, the gas pressure inside the air-bag will follow a predictable profile over time, which is shown schematically in figure 2. It is expected that, for an air-bag of this kind, if the venting arrangement is not activated the air-bag will remain inflated (to some significant degree) for around 500ms.

If, at any time during this period, the venting arrangement is activated, the pressure within the air-bag 10 will drop much more rapidly, and the air-bag will then be substantially fully deflated within around 100ms, and more probably within around 10-50ms, depending on the level of inflation at the time of activation.

In use of the safety system, while the vehicle 1 is in motion the ECU 3 constantly analyses signals from the stereo camera 2 to identify objects with which the vehicle 1 may collide. If an object of interest is identified, the ECU 3 may use one or more algorithms to determine whether or not the object is a pedestrian (in this context "pedestrian" may also include other objects incorporating a human, such as a person on a bicycle, moped or scooter). As is known in the art, this may be achieved by algorithms including shape-matching steps. If the vehicle 1 includes an infra-red camera then the temperature of the object may also be taken into account.

If the object is determined not to be a pedestrian, then the pedestrian protection air-bag 10 will not be activated (although of course other systems to protect the vehicle occupants may be deployed).

As a next step, the ECU 3 may determine whether an impact with the object appears to be inevitable or likely. If an impact does not appear to be likely, then no action will be taken (although this may be reversed if the situation changes, for instance the position and/or trajectory of the vehicle 1 or pedestrian changes).

As a next step, if a collision appears to be possible, the ECU 3 may determine whether the collision can be avoided through active braking and/or steering of the vehicle 1, or another intervention involving one of the vehicle systems such as an alert to the driver. If so, one or more active systems such as active braking or active steering (as are known in the art) may be activated.

As a next step, the ECU 3 may determine whether the vehicle 1 is travelling below a threshold speed. If so, the pedestrian protection air-bag 10 will not be activated, as risk of serious injury may be low. In one embodiment, the threshold speed is 20 km/h.

If the ECU 3 determines that a collision is likely or inevitable to occur with a pedestrian, that the vehicle is travelling at a speed above the threshold speed, and the collision cannot be avoided through an intervention such as active braking, then the pedestrian protection air-bag 10 will be activated.

In preferred embodiments, information from the stereo camera 2 is used to determine the likely time of impact between the vehicle 1 and the pedestrian. The pedestrian protection air-bag 10 will then be activated at a first time (i.e. a first time interval) before the estimated time of impact. This first time is preferably fixed, although in other embodiments it may depend on one or more factors such as the speed of the vehicle 1. The first time may advantageously be 100ms, or around 100ms.

The pedestrian protection air-bag 10 will therefore inflate before the vehicle 1 collides with the pedestrian, based on information gathered by the stereo camera 2.

As a next step, the piezoelectric sensor 8 will (assuming the vehicle 1 does indeed collide with the pedestrian) detect the time of the impact. The venting arrangement is then activated at a second time (i.e. a second time interval) after the detected time of impact.

The second time is variable, in dependence upon one or more factors.

One factor is the relative speed of the collision, which may be determined or estimated taking into account the velocity or speed of both the pedestrian and the vehicle, or alternatively may be determined or estimated based only on the velocity or speed of the vehicle. As the skilled reader will understand, if the collision occurs at a relatively high speed, it is desirable for the pedestrian protection air-bag 10 to have a relatively high pressure when the pedestrian hits the air-bag 10, as it will be necessary to absorb a large amount of kinetic energy. Conversely, if the collision occurs at a lower speed, a lower pressure for the air-bag 10 will be more appropriate.

A further possible factor is the type of pedestrian. The pedestrian may be classified as an adult or a child, for instance based on information gathered from the stereo camera 2. If the pedestrian is classified as an adult, then it is desirable for the pedestrian protection air-bag 10 to have a relatively high pressure when the pedestrian hits the air-bag 10, as (once again) it will be necessary to absorb a large amount of kinetic energy. If the pedestrian is classified as a child, then a lower pressure for the air-bag 10 will be more appropriate.

It may be possible for the system to classify the pedestrian more precisely, e.g. as a small child, a large child, a small adult, or a large adult. The desired pressure for the air-bag 10 as the pedestrian hits the air-bag 10 can then be determined more accurately. Furthermore, the system may be able classify an object as, for example, a cyclist, and a different desired pressure for the air-bag 10 may therefore be appropriate - for instance, in the case of a cyclist, a relatively high pressure may be desirable as the mass of the bicycle needs to be taken into account during the impact, as well as the mass of the cyclist him/herself.

Another factor is the gas pressure within the air-bag 10 at the time of impact. As discussed above, following initial inflation the pressure within the air-bag 10 will follow a predetermined profile, in the absence of venting. This profile is shown schematically in figure 2, and it can be seen that the pressure profile has an initial spike, and then decreases relatively gently for a period of time. If the pressure in the air-bag 10 is still relatively high at the time of impact, then the venting arrangement will need to be activated more quickly in order to reduce the pressure to the desired level. Conversely, if the pressure in the air-bag 10 is already relatively low at the time of impact, then the venting arrangement should be activated later, since the required reduction in pressure will be less.

As mentioned above, using information from the stereo camera 2, the air-bag 10 is inflated at a first time before the estimated time of impact. This first time may be 100ms. However, the real time of impact (as measured by the piezoelectric sensor 8) may be sooner or later than the estimated time of impact. If the real time of impact is sooner than the estimated time of impact, then the air-bag 10 will be inflated to a higher than expected pressure at the real time of impact. Conversely, if the real time of impact is later than the estimated time of impact, then the air-bag 10 will be inflated to a lower than expected pressure at the real time of impact.

This can be taken into account in calculating or setting the second time. As the skilled reader will understand, if the real time of impact is sooner than the estimated time of impact, the second time will need to be shortened (i.e. venting will start earlier), as a higher pressure of gas within the air-bag will need to be vented before the pedestrian strikes the air-bag. On the other hand, if the real time of impact is later than the estimated time of impact, then the second time will need to be lengthened (i.e. venting will start later) as the pressure of gas within the air-bag will already have dropped to a lower level and so less venting will be required to reduce the pressure within the air-bag to the desired level.

The skilled reader will appreciate that additional and/or alternative factors may be taken into account in determining the second time, which is the time difference between the detected time of impact and the time at which the venting arrangement is activated.

It will be appreciated that determining the second time correctly is important. If the pressure of the air-bag 10 is too low when the pedestrian strikes it, the air-bag 10 may not provide sufficient protection and the pedestrian may strike a hard part of the vehicle at speed. If the pressure is too high, on the other hand, the pedestrian may "bounce" off the air-bag and back into the road, which can be very dangerous.

In some embodiments, the second time may be calculated by the ECU (or elsewhere) for each crash event. This calculation may, for instance, take into account the speed of the vehicle, the classification of the pedestrian as a child or an adult, and the gas pressure in the air-bag at the time of impact (derived from the known inflation profile, such as the one seen in figure 2), to calculate the time at which the pedestrian (or a particular part of the pedestrian, such as the head) will make contact with the air-bag 10. In preferred embodiments, the second time is calculated to activate the venting arrangement within ±3-5ms after the time at which the pedestrian's head contact the air-bag 10.

In other arrangements not embodying the invention, the second time is obtained using a look-up table, which includes a value for the second time based on the value for the speed of impact, the classification of the pedestrian, and the gas pressure in the air-bag 10 at the time of impact. This look-up table can be populated with values that are calculated beforehand (from running simulations, performing crash-testing, or a combination of these) and so no delay will occur arising from calculation during the impact event. The values can also be calculated precisely and carefully without time constraints, and can be tested, before being included in the look-up table.

It should be noted that, in some circumstances, it may be better not to vent the air-bag at all. For instance, for a collision with an adult pedestrian at low speed, the air-bag may provide appropriate energy-absorbing properties without any venting of gas.

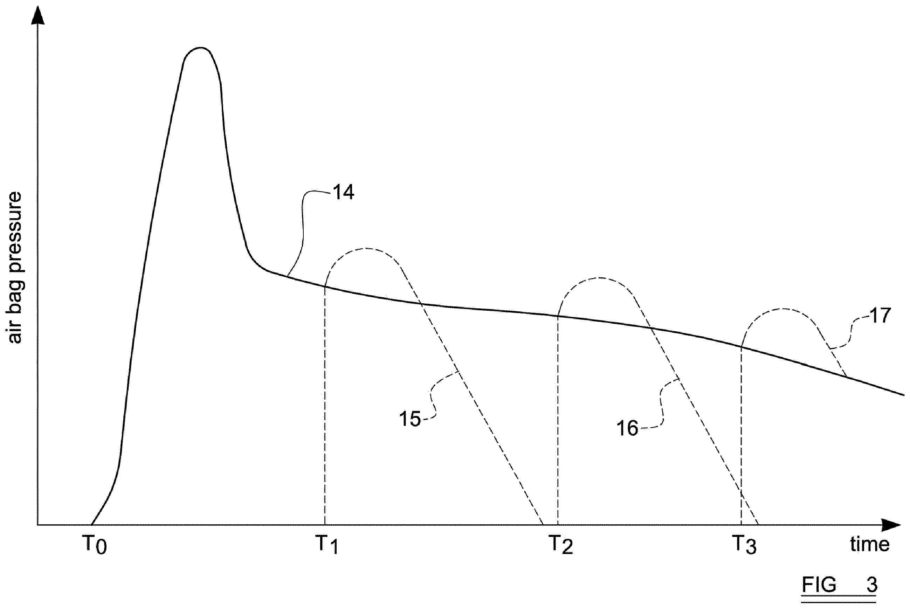

Figure 3 shows a schematic graph showing pressure in the air-bag 10 under different scenarios. The air-bag 10 is first activated at time T₀. A first line 14 on the graph shows the pressure within the air-bag 10 over time if no venting occurs.

A second line 15 on the graph shows the pressure if the venting arrangement is activated relatively early (at time T₁), in the event of a collision with a child pedestrian at relatively low speed. The second line 15 involves an increase in the air-bag pressure, which arises from the impact of the pedestrian with the air-bag 10, but the pressure then falls rapidly due to the activation of the venting arrangement.

A third line 16 on the graph shows the pressure if the venting arrangement is activated relatively late (at time T₂), in the event of a collision with an adult pedestrian at a relatively high speed. Once again, the pressure within the air-bag 10 initially rises, and then falls rapidly.

A fourth line 17 on the graph shows the pressure in the event of a collision with an adult pedestrian (at time T₃) at low speed, where it is determined that no venting is needed, i.e. the pressure in the air-bag 10 will be at least approximately right at the time the pedestrian strikes the air-bag, without any venting being needed. This line comprises an increase in pressure, as the pedestrian strikes the air-bag, but the pressure then returns to that represented by the first line 14.

In accordance with embodiments of the invention, an air-bag is initially inflated before impact with an object, based on information from one or more pre-crash sensors. The air-bag 10 is then vented at a time which is calculated based on a crash sensor which directly detects an impact between the vehicle and the object.

It is anticipated that this technique will be particularly useful for a pedestrian protection air-bag. Firstly, such air-bags tend to be relatively large, since they may need to cover substantially all of the bonnet, windscreen and A-pillars of a vehicle. In contrast, air-bags which inflate inside a vehicle tend to be significantly smaller. The largest air-bags currently produced for use with passenger vehicles have a capacity of around 140 litres. It is estimated, however, that an air-bag which covers substantially all of the bonnet, windscreen and A-pillars of a vehicle, and provides a cushion of sufficient thickness to protect a pedestrian in an impact event, will need to have a capacity of at least 300 litres. Such a large air-bag will take a relatively long time to inflate fully, and so it is advantageous to begin inflation before an impact has occurred.

Secondly, air-bags of this type tend to be mounted on the front of a vehicle, and so will be needed relatively soon after an impact has occurred. By contrast, a dashboard air-bag can be inflated a longer time after impact.

Thirdly, the danger arising from a "false positive" inflation of a pedestrian protection air-bag is relatively low. If a dashboard air-bag inflates when it is not needed, the driver may well be injured as a result of loss of control of the vehicle, and may also be injured directly by the air-bag itself. However, if a pedestrian protection air-bag is inflated unnecessarily, the likelihood of injury or danger is comparatively small. This makes pedestrian protection air-bags more suitable to be triggered based on information from one or more pre-crash sensors, without waiting for direct confirmation from an impact sensor.

However, it is also envisaged that this approach may be useful for other types of vehicle safety system. For instance, a passenger protection air-bag may be inflated within the vehicle cabin before a crash event (e.g. a predicted collision with a pedestrian or vehicle, or roll-over event) based on one or more pre-crash sensors. Venting of the air-bag could then be initiated at a time calculated from the impact itself determined by one or more crash sensors that directly sense the crash event. The timing of the venting could be influenced by factors such as the weight of the passenger (measured by a weight sensor in the seat), and whether the passenger is out of position (determined, for example, by a camera or other sensor within the vehicle cabin). The skilled reader will understand how the techniques described above may be transferred to the situation of a passenger protection air-bag that inflates within a vehicle cabin.

This approach may, in other arrangements not embodying the invention, also be useful for a seat belt tensioner. For instance, a seat belt tensioner may apply tension to a seat belt before a crash event, based on one or more pre-crash sensors. Release of the seat belt, while absorbing energy, may then be initiated at a time calculated from the impact itself determined by one or more crash sensors that directly sense the crash event. Once again, the skilled reader will understand how the techniques described above may be transferred to the situation of seat belt tensioner.

Overall, embodiments of the invention may be seen as "loading" a vehicle safety system pre-emptively in response to information from one or more pre-crash sensors, and then "unloading" the safety system at a later time, while absorbing energy, in response to information from one or more crash sensors.

In the discussion above, the air-bag 10 has a single vent which is opened at a particular time to allow venting of air from the air-bag 10. This is the preferred option, which allows simple and predictable venting behaviour. The level of inflation within the air-bag 10 at the moment when the pedestrian strikes the air-bag 10 is controlled by controlling the time at which the vent is opened.

However, it is envisaged that in other embodiments the venting arrangement may have two or more possible levels of venting, and one of these levels of venting may be selectively used by the ECU. For instance, there may be a large vent aperture and a small vent aperture, and the ECU may open only one of these, or both of these, to give three possible levels of venting. This is only one example and the skilled reader will be aware of other ways in which selectable different levels of venting may be provided.

One factor that could be taken into account in determining which level of venting to use is the likely mass of the pedestrian. If the pedestrian is classified as an adult, and hence likely to have a relatively high mass, a larger vent aperture (or combination of vent apertures) may be opened to allow gas to escape from the interior of the air-bag at a relatively high rate when the pedestrian strikes the air-bag. However, if the likely mass of the pedestrian is lower, a smaller vent aperture may be opened.

In the above description, the preferred pre-crash sensor is an optical camera. In embodiments of the invention, two or more different pre-crash sensors may be used, and information from the sensors combined. For instance, an optical camera is usually the best kind of sensor to use in order to classify an object. However, an optical camera may not be the best choice for determining distance to an object. To determine distance using an optical camera usually requires analysis of a number of frames over time, with the determination of distance becoming more accurate as more frames are analysed. By contrast, a radar system can make a direct measurement of the distance to the object at any time, and so the distance to an object (and also the relative speed of the object with respect to the vehicle) can usually be measured more quickly and accurately using a radar system.

An advantageous system may therefore comprise one or more optical cameras and one or more radar systems. The signals from these pre-crash sensors may be used substantially separately (e.g. object classification is done using the optical camera, and speed/distance of the object is calculated using the radar system), or the information from the two systems may be combined and analysed together.

The skilled reader will understand that embodiments of the invention provide vehicle safety systems, and methods for operating vehicle safety systems, that are reliable and solve many problems associated with prior art safety systems.

When used in this specification and claims, the terms "comprises" and "comprising" and variations thereof mean that the specified features, steps or integers are included. The terms are not to be interpreted to exclude the presence of other features, steps or components.

## Claims

1. A vehicle safety system comprising:
a pre-crash sensor (2), to detect a pedestrian with which the vehicle (1) will collide, or is likely to collide, before a collision between the vehicle (1) and the pedestrian takes place;
a crash sensor (8), to detect directly a collision between the vehicle (1) and the pedestrian;
a control unit (3); and
an air-bag (10) to protect a pedestrian in the event of a collision, wherein the safety system is adapted:
in response to a determination from the pre-crash sensor (2) that a collision is inevitable or likely, but before a determination is made that a crash is occurring, to inflate the air-bag (10); and
in response to a determination from the crash sensor (8) that a collision is occurring, to vent the air-bag (1) after inflation in such a way as to protect a pedestrian who is struck by the vehicle (1),
wherein the venting of the air-bag (10) is initiated a set length of time after the determination from the crash sensor (8), and
wherein the control unit (3) is adapted to calculate the set length of time based upon measured parameters relating to the size of the pedestrian, the relative speed between the vehicle (1) and the pedestrian, and/or the speed of the vehicle (1), and wherein the calculation of the set time takes into account:
an air-bag pressure profile, representing the pressure within the air-bag (10) over time following inflation of the air-bag (10) in the absence of a significant impact or other significant external forces acting on the air-bag (10);
a drop in pressure within the air-bag (10) over time following venting of the air-bag (10);
a desired pressure within the air-bag (10) at the moment of impact between the air-bag (10) and a pedestrian; and
an estimated length of time between the determination by the crash sensor (8) and the moment of impact between the air-bag (10) and a pedestrian.

2. A vehicle safety system according to any preceding claim, wherein the air-bag (10) is provided with two or more different venting modes, allowing venting of gas from the interior of the air-bag at different rates, and the control unit (3) is adapted to select one of the venting modes for the venting step.

3. A method of controlling an air-bag (10) to protect a pedestrian in the event of a collision, the method comprising the steps of:
in response to a determination from a pre-crash sensor (2) that a collision is inevitable or likely, but before a determination is made that a crash is occurring, inflating the air-bag (10); and
in response to a determination from the crash sensor (8) that a collision is occurring, venting the air-bag (1) after inflation in such a way as to protect a pedestrian who is struck by the vehicle (1), wherein venting of the air-bag (10) is initiated a set length of time after the determination from the crash sensor (8),
further comprising calculating the set length of time based upon measured parameters relating to the size of the pedestrian, the relative speed between the vehicle (1) and the pedestrian, and/or the speed of the vehicle (1), and wherein the calculation of the set time takes into account:
an air-bag pressure profile, representing the pressure within the air-bag (10) over time following inflation of the air-bag (10) in the absence of a significant impact or other significant external forces acting on the air-bag (10);
a drop in pressure within the air-bag (10) over time following venting of the air-bag (10);
a desired pressure within the air-bag (10) at the moment of impact between the air-bag (10) and a pedestrian; and
an estimated length of time between the determination by the crash sensor (8) and the moment of impact between the air-bag (10) and a pedestrian.

## Patentansprüche

1. Fahrzeugsicherheitssystem, umfassend:
einen Pre-Crash-Sensor (2) zum Detektieren eines Fußgängers, mit dem das Fahrzeug (1) kollidieren wird oder wahrscheinlich kollidiert, bevor sich eine Kollision zwischen dem Fahrzeug (1) und dem Fußgänger ereignet;
einen Crash-Sensor (8) zum direkten Detektieren einer Kollision zwischen dem Fahrzeug (1) und dem Fußgänger;
ein Steuergerät (3); und
einen Airbag (10) zum Schützen eines Fußgängers im Falle einer Kollision, wobei das Sicherheitssystem ausgelegt ist, um:
als Reaktion auf eine durch den Pre-Crash-Sensor (2) erfolgte Feststellung, dass eine Kollision unvermeidbar oder wahrscheinlich ist, aber bevor eine Feststellung erfolgt, dass sich ein Crash ereignet, den Airbag (10) aufzublasen; und
als Reaktion auf eine durch den Crash-Sensor (8) erfolgte Feststellung, dass sich eine Kollision ereignet, den Airbag (1) nach dem Aufblasen derart zu entlüften, um einen Fußgänger, der vom Fahrzeug (1) getroffen wird, zu schützen,
wobei das Entlüften des Airbags (10) eine festgelegte Zeitdauer nach der durch den Crash-Sensor (8) erfolgten Feststellung eingeleitet wird, und
wobei das Steuergerät (3) dafür ausgelegt ist, die festgelegte Zeitdauer auf Basis gemessener Parameter betreffend die Größe des Fußgängers, die relative Geschwindigkeit zwischen dem Fahrzeug (1) und dem Fußgänger und/oder die Geschwindigkeit des Fahrzeugs (1) zu berechnen, und wobei die Berechnung der festgelegten Zeit Folgendes berücksichtigt:
ein Airbag-Druckprofil, das den Druck innerhalb des Airbags (10) im Zeitverlauf nach Aufblasen des Airbags (10) in der Abwesenheit eines signifikanten Aufpralls oder anderer signifikanter externer, auf den Airbag (10) einwirkender Kräfte repräsentiert;
einen Druckabfall innerhalb des Airbags (10) im Zeitverlauf nach dem Entlüften des Airbags (10);
einen gewünschten Druck innerhalb des Airbags (10) im Augenblick des Aufpralls zwischen dem Airbag (10) und einem Fußgänger; und
eine geschätzte Zeitdauer zwischen der Feststellung durch den Crash-Sensor (8) und dem Augenblick des Aufpralls zwischen dem Airbag (10) und einem Fußgänger.

2. Fahrzeugsicherheitssystem nach einem vorhergehenden Anspruch, wobei der Airbag (10) mit zwei oder mehr verschiedenen Entlüftungsmodi versehen ist, wodurch das Entlüften von Gas aus dem Inneren des Airbags unterschiedlich schnell möglich ist, und das Steuergerät (3) dafür ausgelegt ist, einen der Entlüftungsmodi für den Entlüftungsschritt auszuwählen.

3. Verfahren zur Steuerung eines Airbags (10), um einen Fußgänger im Falle einer Kollision zu schützen, wobei das Verfahren die folgenden Schritte umfasst:
als Reaktion auf eine durch den Pre-Crash-Sensor (2) erfolgte Feststellung, dass eine Kollision unvermeidbar oder wahrscheinlich ist, aber bevor eine Feststellung erfolgt, dass sich ein Crash ereignet, Aufblasen des Airbags (10); und
als Reaktion auf eine durch den Crash-Sensor (8) erfolgte Feststellung, dass sich eine Kollision ereignet, Entlüften des Airbags (1) nach dem Aufblasen derart, um einen Fußgänger, der vom Fahrzeug (1) getroffen wird, zu schützen, wobei das Entlüften des Airbags (10) eine festgelegte Zeitdauer nach der durch den Crash-Sensor (8) erfolgten Feststellung eingeleitet wird,
ferner umfassend das Berechnen der festgelegten Zeitdauer auf Basis gemessener Parameter betreffend die Größe des Fußgängers, die relative Geschwindigkeit zwischen dem Fahrzeug (1) und dem Fußgänger und/oder die Geschwindigkeit des Fahrzeugs (1), und wobei die Berechnung der festgelegten Zeit Folgendes berücksichtigt:
ein Airbag-Druckprofil, das den Druck innerhalb des Airbags (10) im Zeitverlauf nach Aufblasen des Airbags (10) in der Abwesenheit eines signifikanten Aufpralls oder anderer signifikanter externer, auf den Airbag (10) einwirkender Kräfte repräsentiert;
einen Druckabfall innerhalb des Airbags (10) im Zeitverlauf nach dem Entlüften des Airbags (10);
einen gewünschten Druck innerhalb des Airbags (10) im Augenblick des Aufpralls zwischen dem Airbag (10) und einem Fußgänger; und
eine geschätzte Zeitdauer zwischen der Feststellung durch den Crash-Sensor (8) und dem Augenblick des Aufpralls zwischen dem Airbag (10) und einem Fußgänger.

## Revendications

1. Système de sécurité pour véhicule comprenant :
un détecteur de pré-collision (2), pour détecter un piéton avec lequel le véhicule (1) va entrer en collision, ou risque d'entrer en collision, avant qu'une collision entre le véhicule (1) et le piéton ait lieu ;
un détecteur de collision (8), pour détecter directement une collision entre le véhicule (1) et le piéton ;
une unité de commande (3) ; et
un airbag (10) pour protéger un piéton en cas de collision, dans lequel le système de sécurité est adapté :
en réponse à une détermination par le détecteur de pré-collision (2) qu'une collision est inévitable ou probable, mais avant qu'une détermination soit effectuée qu'une collision a lieu, pour gonfler l'airbag (10) ; et
en réponse à une détermination par le détecteur de collision (8) qu'une collision a lieu, pour dégonfler l'airbag (1) après le gonflage de manière à protéger un piéton qui est heurté par le véhicule (1),
dans lequel le dégonflage de l'airbag (10) est actionné une durée définie après la détermination par le détecteur de collision (8), et
dans lequel l'unité de commande (3) est adaptée pour calculer la durée définie sur la base de paramètres mesurés relatifs à la taille du piéton, la vitesse relative entre le véhicule (1) et le piéton, et/ou la vitesse du véhicule (1), et dans lequel le calcul de la durée définie prend en compte :
un profil de pression de l'airbag, représentant la pression dans l'airbag (10) au fil du temps à la suite du gonflage de l'airbag (10) en l'absence d'un impact significatif ou d'autre forces extérieures significatives agissant sur l'airbag (10) ;
une baisse de pression dans l'airbag (10) au fil du temps à la suite du dégonflage de l'airbag (10) ;
une pression souhaitée dans l'airbag (10) au moment de l'impact entre l'airbag (10) et un piéton ; et
une durée estimée entre la détermination par le détecteur de collision (8) et le moment de l'impact entre l'airbag (10) et un piéton.

2. Système de sécurité pour véhicule selon l'une quelconque des revendications précédentes, dans lequel l'airbag (10) est muni de deux ou plus de deux modes de dégonflage différents, permettant le dégonflage de gaz de l'intérieur de l'airbag à des débits différents, et l'unité de commande (3) est adaptée pour sélectionner un des modes de dégonflage pour l'étape de dégonflage.

3. Procédé permettant de commander un airbag (10) pour protéger un piéton en cas de collision, le procédé comprenant les étapes consistant à :
en réponse à une détermination par un détecteur de pré-collision (2) qu'une collision est inévitable ou probable, mais avant qu'une détermination soit effectuée qu'une collision a lieu, gonfler l'airbag (10) ; et
en réponse à une détermination par le détecteur de collision (8) qu'une collision a lieu, dégonfler l'airbag (1) après le gonflage de manière à protéger un piéton qui est heurté par le véhicule (1), dans lequel le dégonflage de l'airbag (10) est actionné une durée définie après la détermination par le détecteur de collision (8),
consistant en outre à calculer la durée définie sur la base de paramètres mesurés relatifs à la taille du piéton, la vitesse relative entre le véhicule (1) et le piéton, et/ou la vitesse du véhicule (1), et dans lequel le calcul de la durée définie prend en compte :
un profil de pression de l'airbag, représentant la pression dans l'airbag (10) au fil du temps à la suite du gonflage de l'airbag (10) en l'absence d'un impact significatif ou d'autre forces extérieures significatives agissant sur l'airbag (10) ;
une baisse de pression dans l'airbag (10) au fil du temps à la suite du dégonflage de l'airbag (10) ;
une pression souhaitée dans l'airbag (10) au moment de l'impact entre l'airbag (10) et un piéton ; et
une durée estimée entre la détermination par le détecteur de collision (8) et le moment de l'impact entre l'airbag (10) et un piéton.
